# EUROPEAN PATENT SPECIFICATION

(11) **EP 1 651 409 B1**
(45) Date of publication and mention of the grant of the patent: **24.01.2007**
(21) Application number: 03780520.7
(22) Date of filing: 24.12.2003
(51) Int. Cl.: B28D 1/04, B23D 45/02, B23D 47/04, B28D 1/00, B23D 1/04

(54) **DEVICE WITH A CIRCULAR BLADE FOR CUTTING FLAT MARBLE, GRANITE AND GLASS SHEETS**
VORRICHTUNG MIT EINEM KREISSÄGEBLATT ZUM SCHNEIDEN FLACHER MARMOR-, GRANIT- UND GLASPLATTEN
DISPOSITIF A LAME CIRCULAIRE POUR COUPER DES FEUILLES PLANES DE MARBRE, DE GRANIT OU DE VERRE

(30) Priority: 08.08.2003 IT MI20031645
(43) Date of publication of application: 03.05.2006
(73) Proprietor: Prussiani Engineering S.r.l, 24021 Albino BG (IT)
(72) Inventor: PRUSSIANI, Mario, Giorgio, I-24021 Albino (Bergamo) (IT)
(74) Representative: Pesce, Michele
(86) International application number: PCT/IB2003/006303
(87) International publication number: WO 2005/014252

(56) References cited:
- EP-A- 0 631 015
- DE-A- 10 109 007
- DE-U- 6 606 703
- FR-A- 2 706 348
- US-A- 1 509 585

## Description

The present invention relates to a circular blade device for cutting flat marble, granite and glass sheets, in accordance with the preamble of claim 1 such a device is known from FR2706348.

Sheet cutting devices have been available commercially for some time, devices provided with a diamond-set circular blade being habitually used for cutting marble, granite, general stone, glass and other sheets.

The blade is usually controlled by numerical control means, which guide it during sheet cutting. Such sheets present virtually standard dimensions, and need to be shaped to form table tops, steps for stairs, kitchen worktops, etc. The sheets are cut by laying them on a cutting area and operating the cutting device.

However, as is well known to the expert of the art, the use of diamond-set circular blades does not enable a cut to be made without material wastage. In this respect because of its particular shape, the blade cuts completely only on its diagonal to the cutting plane while, depending on the blade radius, the material present more or less distant from the diagonal is only partly cut. In effect the shape of the cut follows the shape of the blade.

When cutting stone sheets, in most cases a first series of longitudinal cuts are made along the entire length of the sheet. The sheets are then moved manually and the transverse cuts are made. This manual movement is done by expert operators such as to exclude the sheet appendices from the range of action of the blade, to hence enable the transverse cut to be made without damaging the previously worked sheets. However this operation requires the presence of an operator to continuously supervise the production process. Moreover the idle times due to this movement are extremely harmful to machine productivity. In this respect, the advantage of a numerically controlled working centre is not only its working precision but also its high productivity; the presence of such idle times leads to a halving of the rated productivity of the machine, plus a reduction in precision due to the manual positioning.

In addition, granite, glass and the like present a considerable resistance to compression, but a very poor resistance to tension and consequently to bending. This means that those sheets presenting parts with a small resistant cross-section have to be reinforced by means of an insert of rigid material (steel or the like) glued into one or more longitudinal grooves made in said cross-section. Sheets presenting small sections or unconventional shapes also often require reinforcements. The grooves for housing the reinforcements are evidently made in the lower side of the sheet given that the upper side, which is the visible and hence finished side, must not present imperfections.

Currently, these grooves are usually made by using conventional sheet cutting machines; the sheet is turned over, rested on the cutting support with its face downwards, and the grooves made by the same circular blade as used for cutting the sheet. Afterwards, when the reinforcements have been positioned and glued in, the notches are made which reduce the resistant cross-section.

This is extremely uncomfortable and dangerous. In effect the upper surface of the sheets is substantially finished before proceeding to the sheet cutting; however in making the groove or grooves the sheet is placed with its finished surface on the cutting support. This can cause scraping or scoring of the finished surface of the sheet, making further finishing necessary, with considerable increase in final product cost and with negative consequences regarding productivity.

Moreover when the sheet is turned over, it may break precisely along those sections of least resistance.

An object of the present invention is therefore to provide a circular blade device for cutting flat marble, granite and glass sheets which eliminates the stated technical drawbacks of the known art.

A further object of the present invention is in particular to provide a circular blade device for cutting flat marble, granite and glass sheets which eliminates those idle times which arise from the need to manually move the cut sheets in order to make new cuts.

A further object of the invention is to eliminate or at least reduce manual operations during a working cycle of the said cutting device in order to improve working precision.

A further object of the invention is to provide a circular blade device for cutting flat sheets which enables the grooves to be made in the lower side of the sheet without having to turn it over or rest it on the finished side for support, hence avoiding the danger of scraping or scoring the finished surface, or of breaking the sheet.

These and further objects are attained by a circular blade device for cutting flat marble, granite, glass and similar sheets in accordance with the accompanying claims.

Further characteristics and advantages will be more apparent from the description of a preferred but non-exclusive embodiment of the circular blade device for cutting flat sheets according to the invention, illustrated by way of non-limiting example in the accompanying drawings, in which:
Figure 1 is a front view of the circular blade device for cutting flat sheets according to the present invention;
Figure 2 is a plan view of the device of Figure 1;

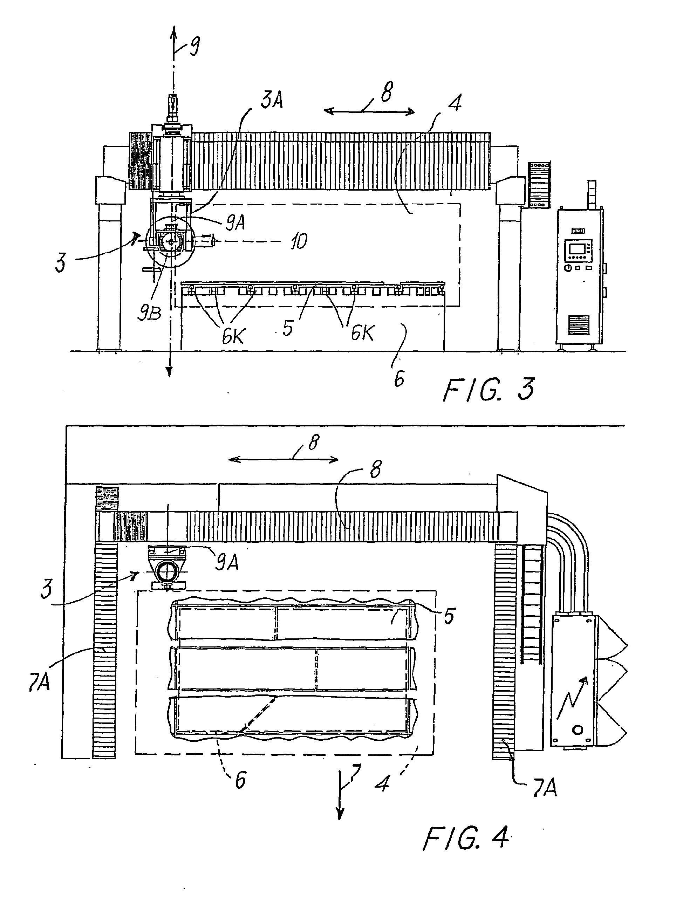

Figure 3 is a front view of a different embodiment of the device of the present invention;
Figure 4 is a plan view of the device of Figure 3;
Figure 5 is an enlarged view of a detail of the device of Figure 3;
Figure 6 is a view of a different embodiment of the detail of Figure 5;
Figure 7 is a plan view of the operating stages of the device of Figure 1;
Figures from 8 to 10 are side views showing operating stages of the device of Figure 3;
Figure 11 is a partly sectional schematic side view of a different embodiment of the device of Figure 1, in which an additional part is shown lateral to the cutting plane of Figure 1;
Figures from 12 to 17 show various positioning and cutting stages of the sheet on the device shown in detail in Figure 9; and
Figures 18 and 19 show sheets formed by the additional part of Figure 11.

Said figures show a circular blade device for cutting flat marble, granite, glass and similar sheets, indicated overall by the numeral 1.

The device comprises a numerical control unit 2 of known type, controlling a cutting head 3 addressable within a cutting volume 4. The cutting head 3, by virtue of moving means means to which it is connected (and described hereinafter), and addressed by the numerical control unit 2, can reach any point of this volume and, in particular, can reach any point of a flat sheet 5, resting on a cutting support 6. The support 6 comprises in known manner a plurality of rollers 6K on which the sheet 5 rests.

Said moving means means enable the cutting head 3 to be moved along a horizontal first axis of translation 7 perpendicular to a second 8, these being perpendicular to a vertical third axis of translation of the cutting head 3.

The movement along said axes is obtained by moving a support 3A for the cutting head 3 along a plate or arm 8A lying along the axis 8. This plate or arm 8A can be moved, by usual electrical actuators (not shown), along parallel arms 7A positioned in correspondence with opposing sides 6A of the cutting support 6 and hence lying along the axis 7. The plate or arm 8A moves along the arms 7A rigidly with the support 3A for the cutting head. This support also slides along a guide 9A positioned along the axis 9 to enable the support 3A to move therealong. This sliding is achieved by a suitable electrical actuator, not shown.

The support 3A contains usual means for moving the cutting head, as described hereinafter.

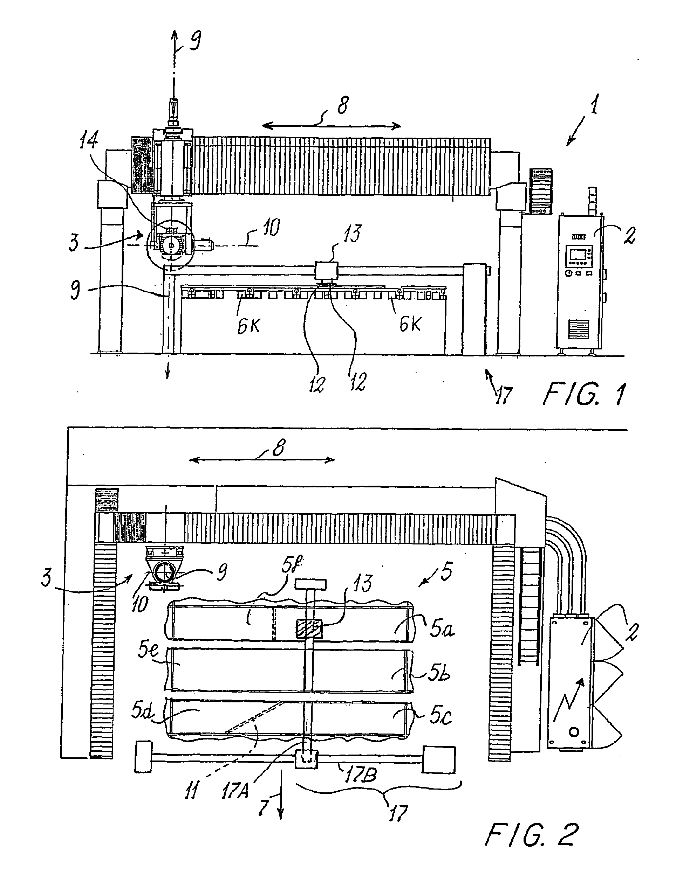

The position control for the head 3, effected along these axes, enables the head to reach any position of the sheet, along any trajectory. The numerical control unit 2 also controls the head movements about another two axes, i.e. rotation about the axis 9 to enable cuts such as that shown in Figure 2 (i.e. diagonal cuts) to be made, and rotation about an axis 10 perpendicular to the axis 9 (Figure 1) to enable cuts to be made with their edge inclined to the upper and lower surface of the sheet.

An articulated arm 17 constitutes a means for moving the sheet appendices 5a, 5b, 5c, 5d, 5e, 5f cut by a diamond-set circular blade 14 present on the cutting head 3. This articulated arm comprises a first straight part 17A which carries a slider 13 (movable along that part) and is perpendicular to and movable relative to a fixed second straight part 17B. The slider 13 presents vertically mobile manipulator members 12, which in the case of Figure 1 are of sucker form. These members 12, in combination with the movements of the slider 13 of the entire articulated arm 17, enable any of the cut sheet portions 5a-5f to be transported into any point of the cutting region, and in particular out of the range of action of the blade 14. The first part 17A is driven, under the control of the unit 2, by usual electrical actuators, not shown.

In a different embodiment, the means for moving said sheets comprise the cutting head 3, equipped with sucker members 12.

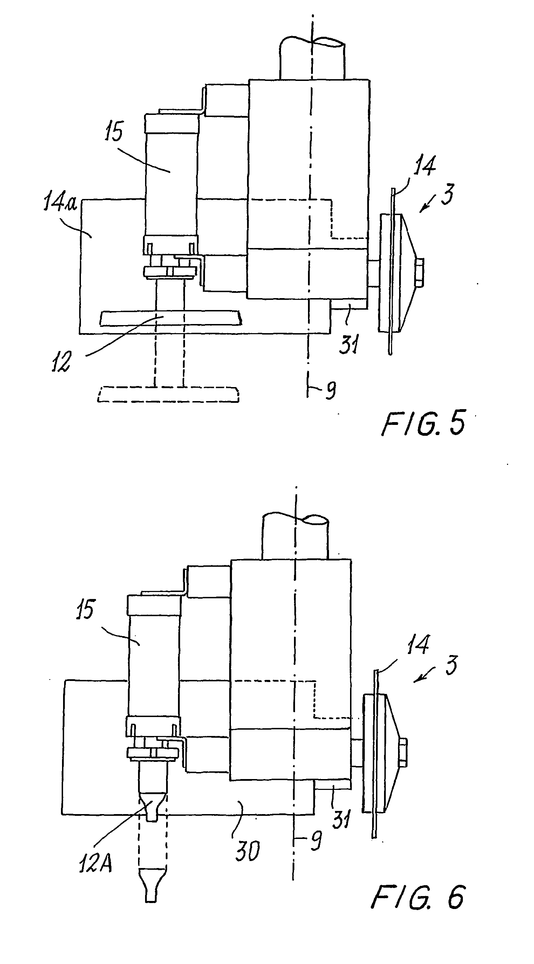

The movable members 12 are controlled in their vertical movement by actuator means, which in this particular example, and as visible in Figure 5, are pneumatic pistons rigid with the cutting head 3. This latter comprises a usual electric motor 30 the shaft 31 of which carries the blade 14.

The operation of the aforedescribed device is apparent from that illustrated: in this respect the cutting head 3, and in particular its manipulation system comprising the numerical control unit and the elements movable along the perpendicular axes 7, 8, 9, accomplishes the double purpose of supporting and addressing the blade 14 in its cutting motion, and of manipulating the sheet 5 and its portions 5a-5f.

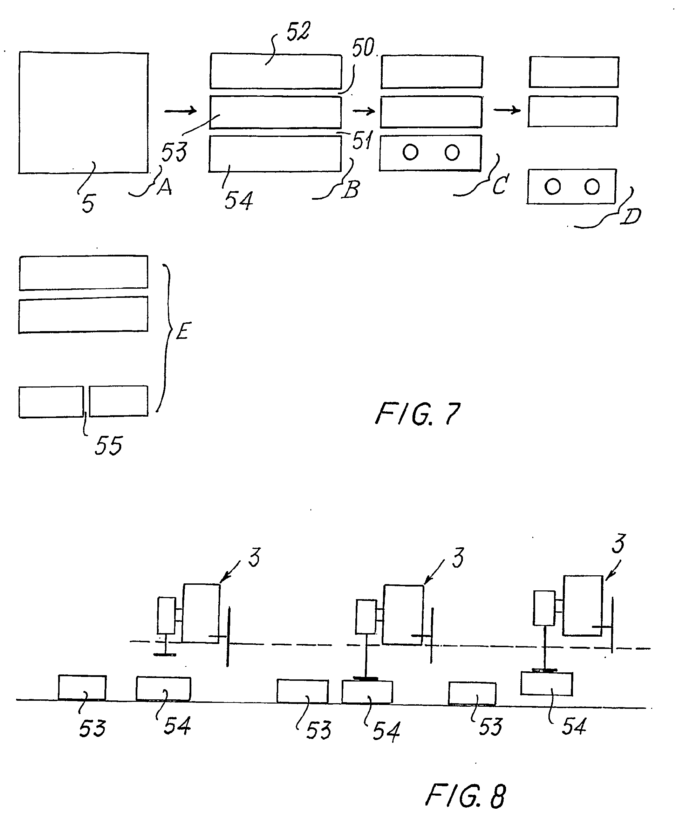

In Figures 7 and 8 the operation of the cutting device is shown in its various stages. In stage A of Figure 7, the sheet is in one piece and has just been rested on the support 6. The blade then operates to make cuts 50, 51 which divide the sheet into three parts 52, 53 and 54 (stage B of Figure 7). The manipulation system is positioned above the sheet portion to be moved, and in this case above the portion 54 (Figure 8, stage F); it can be seen that in this case the sucker members 12 are higher than the lower edge of the blade, to enable the cut to be made. Then, without the cutting head 3 changing position, the pneumatic piston 15 is operated to lower the sucker members 12 onto the sheet, and grip it (stage C of Figure 7 and stage G of Figure 8). The cutting head 3 is raised a few millimetres, sufficient to detach the sheet, locked by the suckers, from the support 6 (stage H of Figure 8). The head 3 is then moved sideways (stage D of Figure 7), lowered and the sucker members 12 removed from the sheet. The necessary transverse cuts 55 are then made.

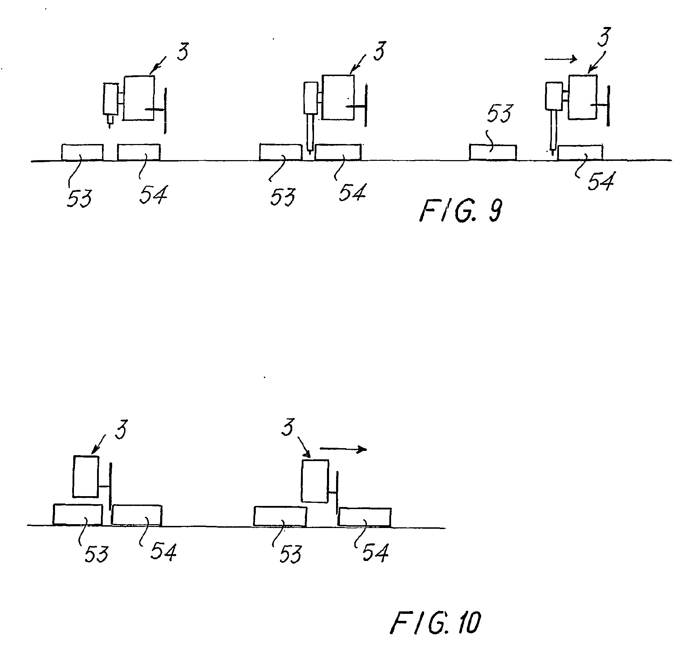

In a different embodiment shown in Figure 6, the manipulator members 12 are wedges which are inserted into the gap left by the cut between the cutting edges; in this case, when the head 3 undergoes a transverse movement (without raising), the cut sheet portion moves. Hence, on termination of the cut, the head 3 is positioned such that the wedges lie above the cut (Figure 9, stage I). The wedge is then lowered into the interior of the cut, until it at least partly penetrates it (Figure 9, stage L). The head 3 is moved transversely with the wedges lowered, with the result that the sheet is removed from the others by sliding along the support. The cut 55 is then made, as in the preceding cases.

In a further embodiment, it is the blade itself which, on termination of its cutting movement, is used as the appendix for moving the sheet portions, by operating along the edges of the cut.

In that case, on termination of the cut the head 3 remains inside the cut (Figure 10, stage N) and is then moved laterally to consequently move the sheet, which slides along the support 6. The transverse cut or cuts 55 are then made as previously.

In a different embodiment, the manipulator members 12, and in particular the suckers, are addressed in such a manner as to enable them to move within a cutting volume 4 which is much larger than that shown in Figure 1; in particular this volume 4 extends well beyond the cutting support 6.

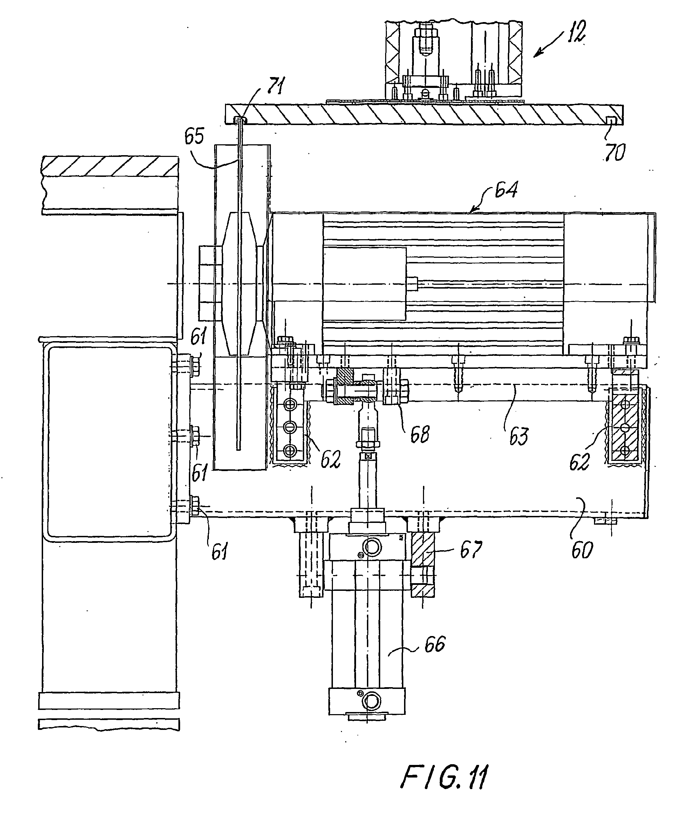

To the side of said support 6 a ledge 60 is present (see Figure 11) fixed to said support by screws 61. Present on said ledge 60 there are vertical guides 62 on which a frame 63 is present, supporting a milling machine 64 provided with a cutting disc 65. The frame 63 is moved vertically by an actuator 66, for example of pressurized fluid type, which is fixed to the ledge (at 67) and to the frame (at 68) to control the vertical movement of the milling machine 64.

Hence the milling machine is disposed substantially to the side of the cutting support and below the surface on which the sheet rests, and carries a cutting disc 65 able to be brought into a position higher than the cutting support 6.

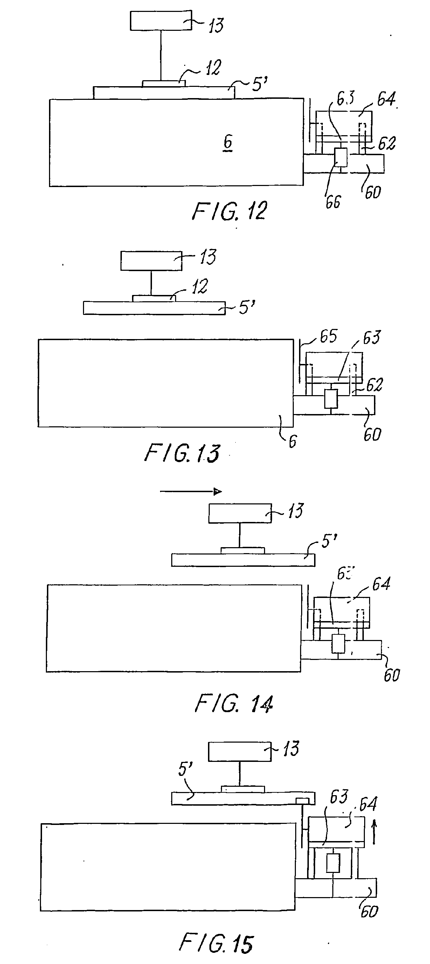

This embodiment operates in the following manner:
when the sheet has been cut by the cutting head 3 (Figure 12) in the manner already explained, the sheet 5' is raised (Figure 13) and positioned above the milling machine 64 (Figure 14).

The sheet 5 is raised substantially by the suction members 12, whether these are mobilized by the cutting head 3 or by an independent slider 13. It should be noted that in Figures from 12 to 17, mobilization is obtained by the slider 13, however it can be equally obtained by means of the cutting head 3, as already described.

Moreover, the sheet 5 does not necessarily have to be raised to be brought above the blade, but can advantageously be slid along the support 6 by the already described manipulation systems.

The actuator 66 (which in the illustrated example is of the pressurized fluid type) then raises the milling machine 64 which makes the cut in the lower surface of the sheet 5.

The cutting movement is imposed by the movement of the slider 13 (this movement in Figure 5 being substantially perpendicular to the plane of the drawing). Hence the groove 70 is obtained in practice.

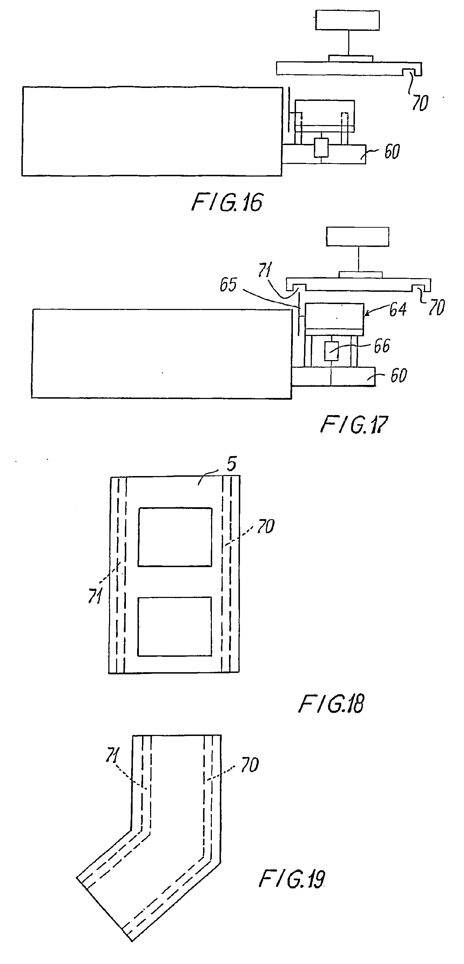

The milling machine 64 is then lowered (Figure 16) and the sheet 5 is moved to make a second groove 71, in the same manner as the first.

This is evidently a description of only one of the numerous cutting cycles obtainable by such a device.

In particular a cutting device such as that described is also advantageous in making grooves in the lower surface of already finished sheets 5, such as that of Figures 18 and 19; in this respect the upper surface comes into contact only with the suckers 12, so avoiding situations which could ruin it.

In a different embodiment the milling machine 64 is mounted on a rotatable platform (not shown but totally conventional), which enables the cutting plane of the blade to be rotated through at least 90°, so that the groove can also be made in a direction, for example, perpendicular to that of the grooves 70 and 71.

A circular blade device for cutting flat marble, granite and glass sheets conceived in this manner is susceptible to numerous modifications and variants, all falling within the scope of the claims.

## Claims

1. A circular blade device (1) for cutting flat marble, granite, glass or similar sheets (5), comprising numerical control means (2) for a cutting head (3) having a blade (14) addressable within a cutting volume and comprising means for manipulating said sheets within said cutting volume, wherein
the manipulating means for said sheets (5) comprise at least one manipulator member (12) extending from the cutting head (3), said manipulator member being arranged to cooperate with the sheet being cut and comprising suckers, said numerical control means (2) being arranged to move the cutting head (3) along a first, a second and a third axis (7, 8, 9) of translation perpendicular to one another **characterized in that** said numerical control means are arranged to rotate said cutting head (3) about said third axis (9) to allow diagonal cuts to be made.

2. A device as claimed in claim 1, **characterised in that** said manipulator member is associated with actuator means (15) which enable it to move vertically.

3. A device as claimed in claim 2, **characterised in that** said actuator means (15) are rigid with the cutting head (3).

4. A device as claimed in claim 2 or 3, **characterized in that** said actuator means (15) are of pneumatic type.

5. A device as claimed in claim 2, **characterised in that** the numerical control means (2) control said actuators.

6. A device as claimed in claim 1, **characterised in that** the suckers operate on the surface of the sheets.

7. A device as claimed in claim 1, **characterised in that** said numerical control means (2) are arranged to rotate said cutting head (3) about a fourth axis (10) perpendicular to said third axis (9), to enable cuts to be made with their edge inclined to the upper and lower surface of the sheet.

8. A device as claimed in claim 1, **characterised by** presenting a cutting disc (65) disposed below the sheets (5) in such a manner as to operate on the lower face of the sheets (5).

9. A device as claimed in claim 8, **characterised in that** said cutting disc (65) is disposed to the side of a cutting support (6) on which said sheet (5) is rested during the cutting by the cutting head.

10. A device as claimed in claim 1, **characterised in that** said cutting disc (65) can be moved vertically by one or more actuators (66).

11. A device as claimed in claim 1, **characterised in that** said cutting disc (65) forms part of a milling machine (64) rigid both with a frame (63) mounted on vertical guides (62) and with an actuator (66) for vertically moving said disc (65).

12. A device as claimed in claim 11, **characterised in that** said vertical guides (62) are fixed to a ledge (60) projecting from said support (6).

13. A device as claimed in claim 1, **characterised in that** said cutting disc (65) can be moved about a vertical axis of rotation to vary its cutting direction.

## Patentansprüche

1. Vorrichtung (1) mit einer kreisförmigen Klinge zum Schneiden flacher Marmor-, Granit-, Glas- oder ähnlicher Schichten (5), welche numerische Steuermittel (2) für einen Schneidknopf (3) mit einer Klinge (14), welche innerhalb eines Schneidraums angesteuert werden kann, umfasst, und welche Mittel zum Manipulieren der Schichten innerhalb des Schneidvolumens umfasst, wobei
die Manipuliermittel für die Schichten (5) mindestens ein Manipulierteil (12) umfassen, welches sich von dem Schneidkopf (3) erstreckt, wobei das Manipulierteil ausgestaltet ist, mit der Schicht, welche geschnitten wird, zusammenzuarbeiten, und Sauger umfasst, wobei die numerischen Steuermittel (2) ausgestaltet sind, den Schneidkopf (3) entlang einer ersten, einer zweiten und einer dritten Translationsachse (7, 8, 9), welche senkrecht zueinander angeordnet sind, zu bewegen, **dadurch gekennzeichnet, dass** die numerischen Steuermittel ausgestaltet sind, den Schneidkopf (3) um die dritte Achse (9) zu drehen, um zu ermöglichen, dass diagonale Schnitte angefertigt werden.

2. Vorrichtung nach Anspruch 1, **dadurch gekennzeichnet, dass** das Manipulierteil in Verbindung mit Betätigungsmitteln (15) ist, welche ermöglichen, es vertikal zu bewegen.

3. Vorrichtung nach Anspruch 2, **dadurch gekennzeichnet, dass** die Betätigungsmittel (15) starr mit dem Schneidkopf (3) verbunden sind.

4. Vorrichtung nach Anspruch 2 oder 3, **dadurch gekennzeichnet, dass** die Manipuliermittel (15) von einer pneumatischen Art sind.

5. Vorrichtung nach Anspruch 2, **dadurch gekennzeichnet, dass** die numerischen Steuermittel (2) die Betätigungsvorrichtungen steuern.

6. Vorrichtung nach Anspruch 1, **dadurch gekennzeichnet, dass** die Sauger auf der Oberfläche der Schichten arbeiten.

7. Vorrichtung nach Anspruch 1, **dadurch gekennzeichnet, dass** die numerischen Steuermittel (2) ausgestaltet sind, den Schneidkopf (3) um eine vierte Achse (10), welche senkrecht zu der dritten Achse (9) ist, zu drehen, um zu ermöglichen, dass Schnitte mit ihren Kannten abgeschrägt zu der oberen und unteren Oberfläche der Schicht angefertigt werden.

8. Vorrichtung nach Anspruch 1, **gekennzeichnet durch** Vorsehen einer Schneidscheibe (65), welche unterhalb der Schichten (5) in einer derartigen Art und Weise angeordnet ist, dass sie auf der unteren Oberfläche der Schichten (5) arbeitet.

9. Vorrichtung nach Anspruch 8, **dadurch gekennzeichnet, dass** die Schneidscheibe (65) an der Seite eines Schneidhalters (6) angeordnet ist, auf welchem die Schicht (5) während des Schneidens durch den Schneidkopf aufliegt.

10. Vorrichtung nach Anspruch 1, **dadurch gekennzeichnet, dass** die Schneidscheibe (65) vertikal durch eine oder mehrere Betätigungsvorrichtungen (66) bewegt werden kann.

11. Vorrichtung nach Anspruch 1, **dadurch gekennzeichnet, dass** die Schneidscheibe (65) einen Teil einer Fräsmaschine (64) ausbildet, wobei beide fest mit einem Rahmen (63) auf vertikalen Führungen (62) und mit einer Betätigungsvorrichtung (66) zum vertikalen Bewegen der Scheibe (65) verbunden sind.

12. Vorrichtung nach Anspruch 11, **dadurch gekennzeichnet, dass** die vertikalen Führungen (62) an einer Leiste (60), welche von dem Halter (6) hervorragt, befestigt sind.

13. Vorrichtung nach Anspruch 1, **dadurch gekennzeichnet, dass** die Schneidscheibe (65) um eine vertikale Drehachse bewegt werden kann, um ihre Schneidrichtung zu verändern.

## Revendications

1. Dispositif à lame circulaire (1) pour couper du marbre plat, du granit, du verre ou des feuilles similaires (5), comprenant des moyens de commande numérique (2) pour une tête de coupe (3) ayant une lame (14) utile dans un volume de coupe et comprenant des moyens pour manipuler lesdites feuilles dans ledit volume de coupe, dans lequel :
les moyens de manipulation pour lesdites feuilles (5) comprennent au moins un élément manipulateur (12) s'étendant à partir de la tête de coupe (3), ledit élément manipulateur étant agencé pour coopérer avec la feuille qui est coupée et comprenant des ventouses,
lesdits moyens de commande numérique (2) étant agencés pour déplacer la tête de coupe (3) le long d'un premier, d'un second et d'un troisième axe (7, 8, 9) de translation perpendiculaire les uns par rapport aux autres, **caractérisé en ce que** lesdits moyens de commande numérique sont agencés pour faire tourner ladite tête de coupe (3) autour dudit troisième axe (9) pour permettre de réaliser des coupes diagonales.

2. Dispositif selon la revendication 1, **caractérisé en ce que** ledit élément manipulateur est associé avec des moyens formant actionneurs (15) qui lui permettent de se déplacer verticalement.

3. Dispositif selon la revendication 2, **caractérisé en ce que** lesdits moyens actionneurs (15) sont rigides avec la tête de coupe (3).

4. Dispositif selon la revendication 2 ou 3, **caractérisé en ce que** lesdits moyens actionneurs (15) sont du type pneumatique.

5. Dispositif selon la revendication 2, **caractérisé en ce que** les moyens de commande numérique (2) commandent lesdits actionneurs.

6. Dispositif selon la revendication 1, **caractérisé en ce que** lesdites ventouses fonctionnent sur la surface des feuilles.

7. Dispositif selon la revendication 1, **caractérisé en ce que** lesdits moyens de commande numérique (2) sont agencés pour faire tourner ladite tête de coupe (3) autour d'un quatrième axe (10) perpendiculaire audit troisième axe (9) pour permettre de réaliser des coupes avec leur bord incliné par rapport à la surface supérieure et la surface inférieure de la feuille.

8. Dispositif selon la revendication 1, **caractérisé par** la présentation d'un disque de coupe (65) disposé au-dessous des feuilles (5) afin de fonctionner sur la face inférieure des feuilles (5).

9. Dispositif selon la revendication 8, **caractérisé en ce que** le disque de coupe (65) est disposé sur le côté d'un support de coupe (6) sur lequel ladite feuille (5) repose pendant la coupe par la tête de coupe.

10. Dispositif selon la revendication 1, **caractérisé en ce que** le disque de coupe (65) peut être déplacé verticalement par un ou plusieurs actionneurs (66).

11. Dispositif selon la revendication 1, **caractérisé en ce que** ledit disque de coupe (65) fait partie d'une machine à fraiser (64) rigide à la fois avec un châssis (63) monté sur des guides verticaux (62) et avec un actionneur (66) pour déplacer verticalement ledit disque (65).

12. Dispositif selon la revendication 11, **caractérisé en ce que** lesdits guides verticaux (62) sont fixés à une saillie (60) faisant saillie à partir dudit support (6).

13. Dispositif selon la revendication 1, **caractérisé en ce que** ledit disque de coupe (65) peut être déplacé autour d'un axe vertical de rotation pour modifier sa direction de coupe.
